# EUROPEAN PATENT APPLICATION

(11) **EP 0 998 158 A2**
(43) Date of publication of application: **03.05.2000**
(21) Application number: 99250378.9
(22) Date of filing: 26.10.1999
(51) Int. Cl.: H04Q 7/38

(54) **Method and system to relieve sudden temporary congestion**

(30) Priority: 27.10.1998 JP 32141098
(71) Applicant: NEC CORPORATION, Tokyo (JP)
(72) Inventor: Kato, Akiko c/o NEC Corporation, Minato-ku Tokyo (JP)
(74) Representative: Patentanwälte Wenzel & Kalkoff

(57) **Abstract**

In a communication state improving method in a mobile communication system in which a plurality of mobile units generate communication channel setting requests to a base station by using a common channel, the retransmission count of a communication channel setting request in a service area of the base station is measured. The communication state in the service area is improved on the basis of the count result. A mobile communication system is also disclosed.

## Description

### Background of the Invention

The present invention relates to a mobile communication system in which a plurality of users generate communication channel setting requests by using a common channel when performing position registration and originating operation and, more particularly, to a communication state improving method and mobile communication system which can improve a communication state when the number of users increases abruptly.

In a mobile communication system, a plurality of users generate communication channel setting requests by using a common channel when performing position registration and originating operation. If, however, many users are present in one service area, and a plurality of users simultaneously try to perform position registration and originating operation while a given common channel is being used, communication channel setting requests come to the common channel in a rush, resulting in collisions.

In the mobile communication system, mobile units exchange signals by radio with a base station. Mobile units located in a given area communicate with a specific base station. As a plurality of mobile units in the area frequently access one base station, these accesses are made at once. As a consequence, access requests from mobile units do not reach the base station. This state is generally termed a collision. When such a collision occurs, each mobile unit repeats retransmission of the communication channel setting request, and has difficulty in performing position registration and originating operation.

A technique of solving such a problem is disclosed in Japanese Patent Laid-Open No. 8-111886. According to this technique, each mobile belonging to a given radio zone receives origination/position registration restriction information associated with the radio zone transmitted from a base station covering the given radio zone to restrict originating operation and position registration. In this case, the frequency of collisions between signals in a common channel is observed, and originating operation and position registration are restricted on the basis of the observation result.

More specifically, each mobile unit transmits a communication channel setting request signal through a common channel when performing originating operation and position registration, and counts the number of times the communication channel setting request signal is transmitted from the instant when origination and position registration requests are generated. The mobile unit then transmits the counted number of times of transmission of the setting request signal to the base station.

The base station sets conditions that restrict originating operation and position registration on the basis of the setting request signal transmission count transmitted from the mobile unit. The total number of received communication channel setting requests becomes smaller than the maximum capacity of a common channel when many communication channel setting requests are generated, and many setting request signals are not received owing to collisions, or the number of request signals actually decreases. If collisions occur, each mobile unit generates a setting request again. As a consequence, the ratio of re-request signals to all received setting request signals increases.

The total number of received request signals becomes smaller than a predetermined value. In addition, if the ratio of re-request signals to received request signals increases, it can be determined that collisions have occurred. If, therefore, the total number of received request signals is less than a predetermined value, and the ratio of re-request signals to all received setting request signals exceeds a predetermined ratio, it is determined that many collisions have occurred, thereby setting restriction conditions for originating operation and position registration.

The restriction conditions set in this manner are transmitted to each mobile unit. Each mobile unit checks on the basis of the received restriction conditions whether originating operation and position registration are restricted. The mobile unit then interrupts the generation of origination and position registration requests or performs re-request processing on the basis of the received restriction conditions.

The following problems to be improved, however, are left in the conventional technique disclosed in Japanese Patent Laid-Open No. 8-111886. According to the technique disclosed in Japanese Patent Laid-Open No. 8-111886, each mobile unit transmits a communication channel setting request signal count and re-request signal count to the base station. The base station sets restriction conditions for position registration and originating operation on the basis of these pieces of information and transmits the restriction conditions to the mobile unit. When generating origination and position registration requests again, the mobile unit checks the presence/absence of restriction conditions, and also checks whether origination and position registration requests can be generated. However, this restriction method is a passive method, i.e., restricting originating operation and position registration request until congestion is relieved. There is room for improvement in this method in terms of improvement in service.

In addition, even if the number of mobile units present in the service area of a given base station remains unchanged or increases, the above restriction is kept imposed. This makes it more difficult to access the base station.

### Summary of the Invention

It is an object of the present invention to provide a communication state improving method and mobile communication system for allowing a plurality of users to perform communication by using a common channel, in which when the number of users in a given service area increases abruptly, the capacity is increased and actively suppresses the occurrence of collisions to quickly set a communication channel, thereby preventing deterioration in service.

It is another object of the present invention to provide a communication state improving method and mobile communication system which can efficiently assign channels while minimizing interference by quickly restoring the standard state when congestion is relieved.

It is still another object of the present invention to provide a communication state improving method and mobile communication system in which even if a specific mobile unit of the mobile units located in the same service area has difficulty in performing communication, the communication state of the mobile unit is improved to minimize the difficulty in performing communication.

It is still another object of the present invention to provide a communication state improving method and mobile communication system which sets the degree of urgency for each congestion state, and can improve a communication state in accordance with the degree of urgency.

In order to achieve the above objects, according to the present invention, there is provided a communication state improving method in a mobile communication system in which a plurality of mobile units generate communication channel setting requests to a base station by using a common channel, comprising the steps of measuring a retransmission count of a communication channel setting request in a service area of the base station, and improving a communication state in the service area on the basis of the count result.

### Brief Description of the Drawings

Fig. 1 is a block diagram showing the arrangement of a mobile communication system according to a first embodiment of the present invention;
Fig. 2 is a view showing a state in which a base station transmits the information of common channels that can be used in the area to each mobile unit by using a notification channel in the first embodiment of the present invention;
Fig. 3 is a view showing a state in which position registration and origination requests are sent from the respective mobile units in a rush, and communication channel setting requests from the mobile units collide with each other in the first embodiment of the present invention;
Fig. 4 is a view showing a state in which a common channel is additionally set in the area in the first embodiment of the present invention;
Fig. 5 is a view showing a table in which the retransmission counts of communication channel setting request signals are made to correspond to retransmission level values;
Fig. 6 is a flow chart showing the operation of a mobile unit in the first embodiment of the present invention;
Fig. 7 is a flow chart showing the operation of a base station in the first embodiment of the present invention;
Fig. 8 is a graph showing an example of the relationship between the retransmission count of a communication channel setting request signal and the retransmission level value in the first embodiment of the present invention;
Fig. 9 is a graph showing another example of the relationship between the retransmission count of a communication channel setting request signal and the retransmission level value in the first embodiment of the present invention;
Fig. 10 is a graph for explaining a method of determining the timing of execution of communication state improvement on the basis of the retransmission count of a communication channel setting request signal in a third embodiment of the present invention;
Fig. 11 is a graph for explaining a method of determining the timing of execution of communication state improvement on the basis of the retransmission count of a communication channel setting request signal in a fourth embodiment of the present invention; and
Fig. 12 is a block diagram showing the arrangement of a mobile communication system according to a fifth embodiment of the present invention.

### Description of the Preferred Embodiments

Embodiments of the present invention will be described in detail next with reference to the accompanying drawings.

### First Embodiment

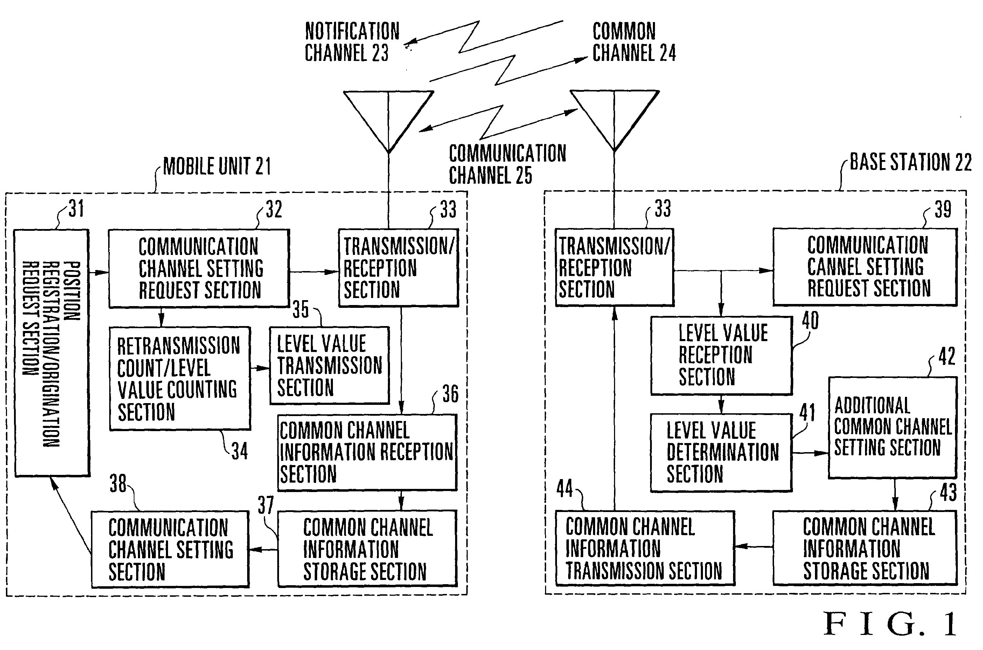

A mobile communication system according to the first embodiment will be described first. As shown in Fig. 1, this mobile communication system is made up of a mobile unit 21 and base station 22.

The mobile unit 21 includes a position registration/origination request section 31 for registering the position of the mobile unit 21 or originating a call to the base station 22, which covers a service area, when, for example, the power supply is turned on or a shift from a communicative state to an uncommunicative state occurs, communication channel setting request section 32 for generating a communication channel setting request to the base station 22, transmission/reception section 33 for transmitting/receiving various signals, retransmission count/level value counting section 34 for measuring the retransmission count of a communication channel setting request and retransmission level value, level value transmission section 35 for transmitting the measurement values to the retransmission count/level value counting section 34, common channel information reception section 36, common channel information storage section 37, and communication channel setting section 38.

The base station 22 includes a transmission/reception section 33 for transmitting/receiving various signals, communication channel setting request section 39, level value reception section 40 for receiving the retransmission level value transmitted from the mobile unit 21, level value determination section 41 for determining the retransmission level value, additional common channel setting section 42, common channel information storage section 43, and common channel information transmission section 44.

The above position registration will be described in detail below. In a mobile communication system with the merit of allowing a user to freely move while carrying the mobile unit 21, when an incoming call is addressed to a given mobile unit 21, the mobile unit 21 cannot be called unless the network side knows the area where the mobile unit 21 is currently present.

The mobile unit 21 must therefore register the position information of the mobile unit 21 in the network in advance. This processing is position registration.

Upon reception of a termination request with respect to the mobile unit 21 having undergone position registration, the network performs termination calling to only the area where the mobile unit 21 is present.

When the mobile unit 21 moves to another area, the mobile unit 21 performs position registration again in the new area to allow the network to always grasp the area where the mobile unit is present.

When the mobile unit 21 generates a position registration request and origination request, the communication channel setting request section 32 transmits a communication channel setting request signal through a common channel 24. The retransmission count/level value counting section 34 calculates the retransmission count of the communication channel setting request signal and retransmission level value from the instant when the position registration/origination request is generated. The level value transmission section 35 transmits the retransmission level value of the communication channel setting request signal based on the retransmission count through the transmission/reception section 33.

A common channel will be described below. When the mobile unit 21 is to perform position registration, the mobile unit 21 sends a communication channel setting request, which is generated to execute a position registration procedure, to the nearest base station 22 through a reverse (communicating direction viewed from the mobile unit 21) control channel by random access. This communication channel is uniquely assigned to each mobile unit 21 and released at the end of communication. A reverse control channel based on random access is commonly assigned to mobile units within a position registration area, and hence is termed as a common channel.

Although a notification channel 23 (to be described later) is a kind of common channel, a communication channel assignment request is generated by using this common control channel in origination requesting operation or the like as well as in the above position registration.

In the field of data communication (packet communication), this common channel is used in data communication (e.g., electronic mail communication) in which a delay is permitted to a certain extent, and the traffic amount is small.

The notification channel 23 is a one-way channel used by the base station 22 to notify the mobile unit 21 of control information. This control information contains information for position registration, information associated with a channel structure, system information, and the like.

The level value reception section 40 of the base station 22 receives a retransmission level value through the transmission/reception section 33 of the base station 22. The level value determination section 41 determines the retransmission level value. The additional common channel setting section 42 additionally sets a common channel when the level value determination section 41 determines that collisions frequently occur. The information of this additionally set common channel is stored in the common channel information storage section 43. At the same time, information indicating whether any common channel is currently added is also stored in the common channel information storage section 43.

The common channel information transmission section 44 transmits the information of an available common channel to the mobile unit 21 through the transmission/reception section 33 and notification channel 23.

The common channel information reception section 36 of the mobile unit 21 receives the information of the available common channel, transmitted from the base station 22, through the transmission/reception section 33 of the mobile unit 21. The received common channel information is stored in the common channel information storage section 37.

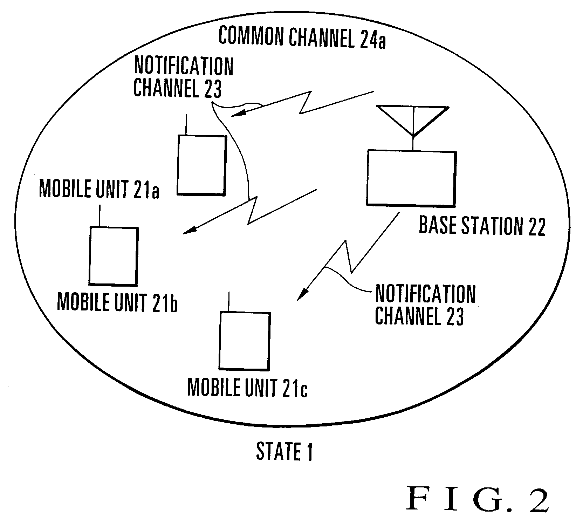

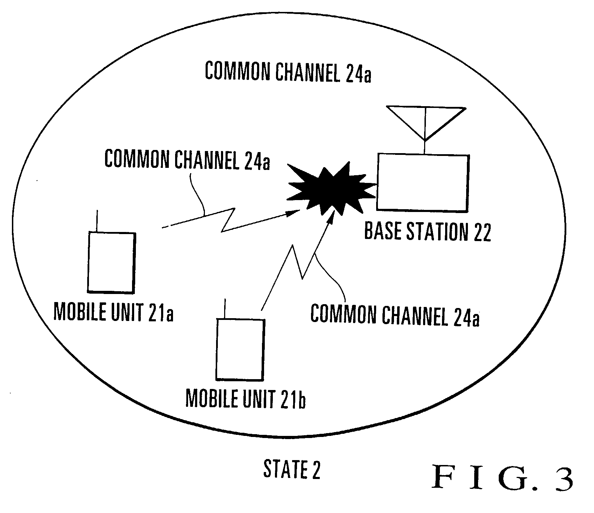

A communication state improving method according to this embodiment will be described next. In state 1 in Fig. 2, the base station 22 transmits to each mobile unit 21 the information of a common channel 24a which can be used within the area covered by the base station 22. Upon generating a position registration request and origination request, each mobile unit 21 sends a communication channel setting request by using an available common channel. Assume that the number of users existing in the area abruptly increases, position registration and origination requests come from the respective mobile units 21 in a rush, and communication channel setting requests from mobile units 21a and 21b collide with each other, as indicated by state 2 in Fig. 3. This case will be described below.

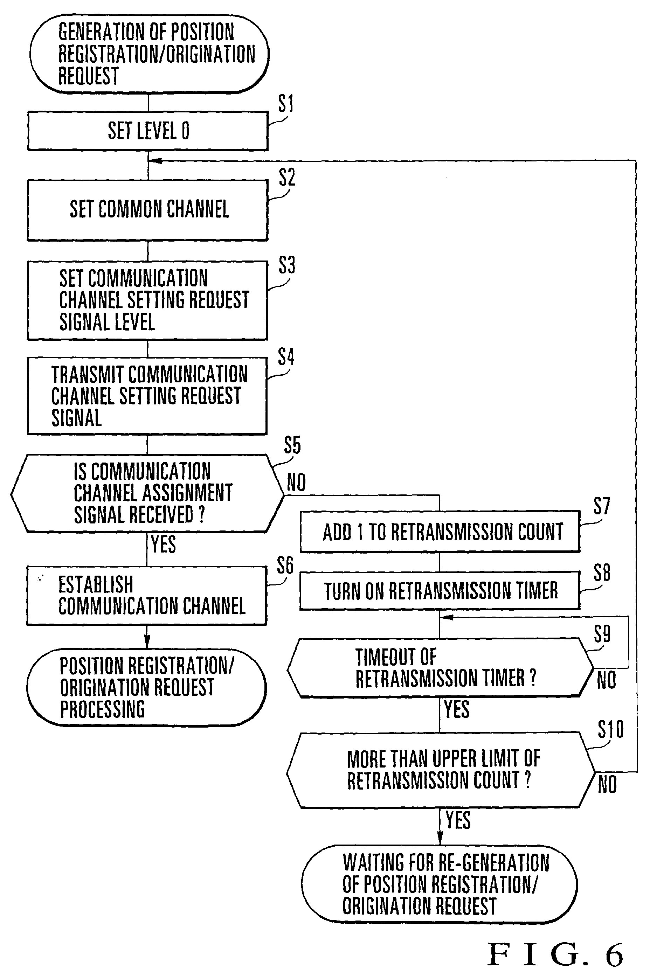

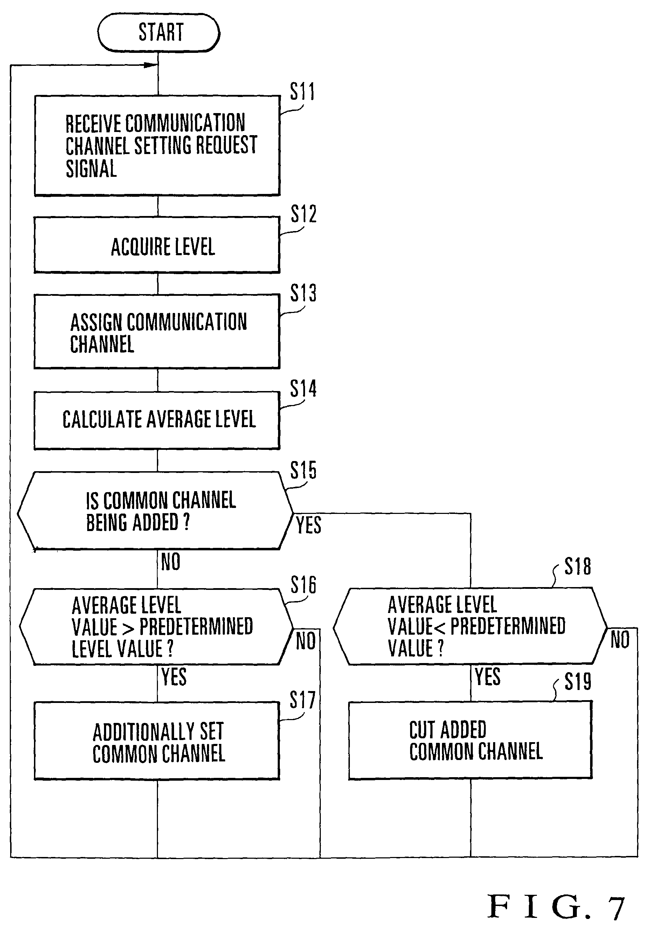

Fig. 6 shows the flow of processing to be performed by the mobile unit 21 upon generation of position registration and origination requests. Fig. 7 shows the flow of processing to be performed by the base station 22.

When the position registration/origination request section 31 generates a position registration/origination request, both the retransmission count and retransmission level value are set to 0 (step S1 in Fig. 6).

The communication channel setting section 38 selects and sets the common channel 24a to be used on the basis of the information of currently available common channels stored in the common channel information storage section 37 (step S2).

The communication channel setting request section 32 outputs a communication channel setting request signal. The level value transmission section 35 sets a retransmission level value of 0 in this communication channel setting request signal (step S3).

The transmission/reception section 33 of the mobile unit 21 transmits the communication channel setting request signal through the common channel 24 (step S4).

The mobile unit 21 having undergone a collision retransmits the communication channel setting request signal until a communication channel is assigned.

When a communication channel assignment signal is received from the base station 22 (step S5), a communication channel is established (step S6), and the mobile unit 21 performs subsequent processing.

If no communication channel assignment signal is received, the retransmission count/level value counting section 34 measures a retransmission count and retransmission level value (step S7). More specifically, the retransmission count/level value counting section 34 obtains a new retransmission count by adding 1 to the currently stored retransmission count, and determines a retransmission level value on the basis of the new retransmission count.

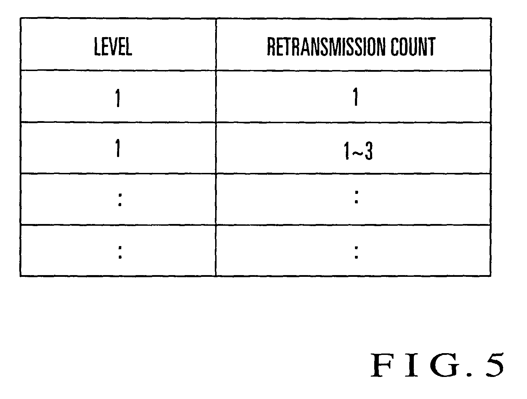

In this case, as shown in Fig. 5, the retransmission counts of a communication channel setting request signal are formed into groups according to predetermined counts, and retransmission level values are set in units of groups. The retransmission count/level value counting section 34 determines a retransmission level value from a corresponding retransmission count by looking up a preset table like the one shown in Fig. 5.

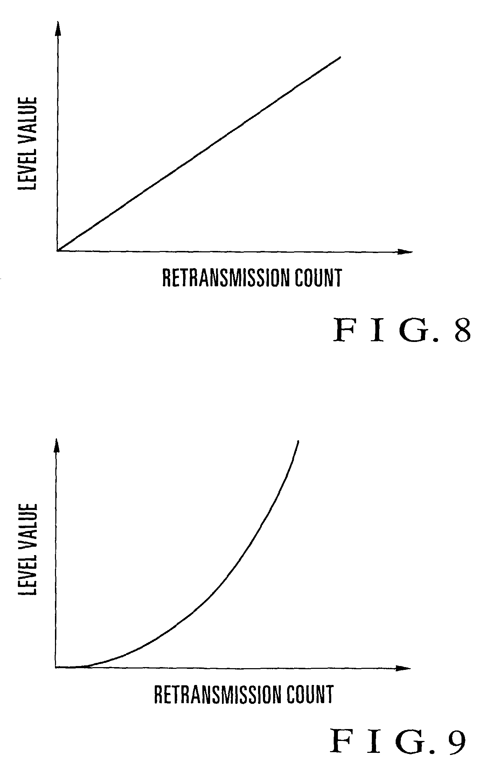

Retransmission level values are set to linearly increase with an increase in retransmission count, as shown in Fig. 8.

Retransmission level values may be set to increase in the form of a logarithmic curve with an increase in retransmission count, as shown in Fig. 9. If a retransmission level value is set according to a relationship in the form of a logarithmic curve, the retransmission level value abruptly increases with an increase in retransmission count. This speeds up the communication state improving processing.

A retransmission timer (not shown) is then turned on to start time measurement (step S8).

The communication channel setting request section 32 checks whether the measurement time of the retransmission time has exceeded a predetermined set time (step S9). This set time is appropriately set to a time that allows the mobile unit to obtain a response to an access by retransmission processing (to be described later).

When the measurement time of the retransmission timer exceeds the set time, the communication channel setting request section 32 checks whether the retransmission count measured by the retransmission count/level value counting section 34 has exceeded a predetermined upper limit (step S10).

If the retransmission count has not exceeded the upper limit, the flow returns to step S2 and the subsequent steps to perform retransmission processing for the communication channel setting request signal.

This retransmission processing is repeated until a communication channel assignment signal is received from the base station 22 (YES in step S5) or the retransmission count exceeds the predetermined upper limit (YES in step S10).

If it is determined in step S10 that the retransmission count has exceeded the upper limit, the mobile unit 21 interrupts the processing, and is kept in the standby state until the position registration/origination request section 31 generates a position registration/origination request again.

Retransmission processing for a communication channel setting request signal is performed when the mobile unit 21 sends an access request to the base station 22, but no response to the access is received from the base station 22 because of some trouble. Troubles that demand retransmission processing include the above collision, an inability to receive a request from the mobile unit 21 because of a communication channel congestion, and the like.

When the retransmission count exceeds the upper limit, the mobile unit 21 is set in the standby state to prevent the execution of unnecessary request processing when the mobile unit 21 is located outside the service area and cannot perform communication itself.

If the transmission/reception section 33 of the base station 22 receives a communication channel setting request signal from the mobile unit 21 (step S11 in Fig. 7), the level value reception section 40 of the base station 22 acquires the retransmission level value set in this communication channel setting request signal (step S12).

After a communication channel is assigned (step S13), the level value determination section 41 calculates the average value of retransmission level values received within, e.g., a predetermined period of time (step S14).

The additional common channel setting section 42 checks, on the basis of the information stored in the common channel information storage section 43, whether any common channel is added (step S15). If no common channel is added, the additional common channel setting section 42 checks whether the average value calculated by the level value determination section 41 is larger than a predetermined level value (step S16). If it is determined that the average value is larger than the predetermined value, and a common channel needs to be added, the additional common channel setting section 42 additionally sets a common channel 24b (step S17). More specifically, the additional common channel setting section 42 makes retransmission count/level value counting section 34 additionally store the information of the additionally set common channel 24b. At the same time, the additional common channel setting section 42 makes the common channel information storage section 43 store information indicating that a common channel is currently added.

The common channel information transmission section 44 transmits the information of the currently available common channels to each mobile unit 21 in the area through the transmission/reception section 33 and notification channel 23.

The common channel information reception section 36 of each mobile unit 21 receives through the transmission/reception section 33 of the mobile unit 21 the information of the available common channels 24a and 24b transmitted from the base station 22 through the notification channel 23. The received information of the common channels 24a and 24b is stored in the common channel information storage section 37.

The communication channel setting section 38 selects and sets the available common channel 24b on the basis of the common channel information stored in the common channel information storage section 37.

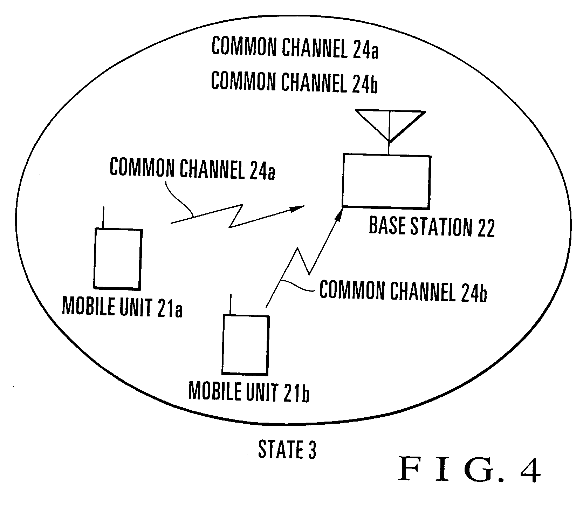

With the above processing the common channel 24b is added in the area, as indicated by state 3 in Fig. 4.

As described above, according to the first embodiment, when many users are present in a given service area (e.g., a specific place where users gather at a specific time point, e.g., a bus stop, station, or area for a special event), and position registration/origination requests frequently collide with each other, the base station 22 detects this, and adds the available common channel 24 within the area, thereby reducing the frequency of collisions and allowing each mobile unit to quickly ensure a communication channel. According to the first embodiment, therefore, if the retransmission count (retransmission level value) of a communication channel setting request signal exceeds a predetermined value, it is determined that collisions frequently occur between mobile units, and a common channel is added to improve the communication state. This makes it possible to smoothly set communication channels.

### Second Embodiment

The second embodiment of the present invention will be described next with reference to Fig. 7.

Upon reception of retransmission level value from each mobile unit 21, an additional common channel setting section 42 of a base station 22 checks, on the basis of the information stored in a common channel information storage section 43, whether any common channel is added (step S15 in Fig. 7). If a common channel is added, the additional common channel setting section 42 checks whether the average level value calculated by a level value determination section 41 is smaller than a predetermined level value (step S18). If it is determined that the average level value is smaller than the predetermined level value, and a common channel must be cut, the additional common channel setting section 42 cuts the common channel (step S19). More specifically, the additional common channel setting section 42 deletes the information of the target common channel from the information of the currently available common channels stored in the common channel information storage section 43. If the added common channel is cut by this cutting operation, the additional common channel setting section 42 causes the common channel information storage section 43 to store information indicating that no common channel is currently added.

The information of the currently available common channels is sent from a common channel information transmission section 44 to each mobile unit 21 in the area through a transmission/reception section 33 and notification channel 23.

A common channel information reception section 36 of each mobile unit 21 receives through a transmission/reception section 33 of the mobile unit 21 the information of the available common channels transmitted from the base station 22 through the notification channel 23. The received common channel information is stored in a common channel information storage section 37.

A communication channel setting section 38 selects and sets an available common channel on the basis of the common channel information stored in the common channel information storage section 37.

In the second embodiment, when congestion is reduced, an added common channel is cut to always set the number of common channels to an appropriate number, thereby implementing efficient channel assignment with minimum interference.

### Third Embodiment

The first and second embodiments described above are merely examples, and can be variously modified. In the first and second embodiments, for example, the retransmission counts of communication channel setting request signals are formed into groups, and the number of common channels is increased/decreased on the basis of a retransmission level value.

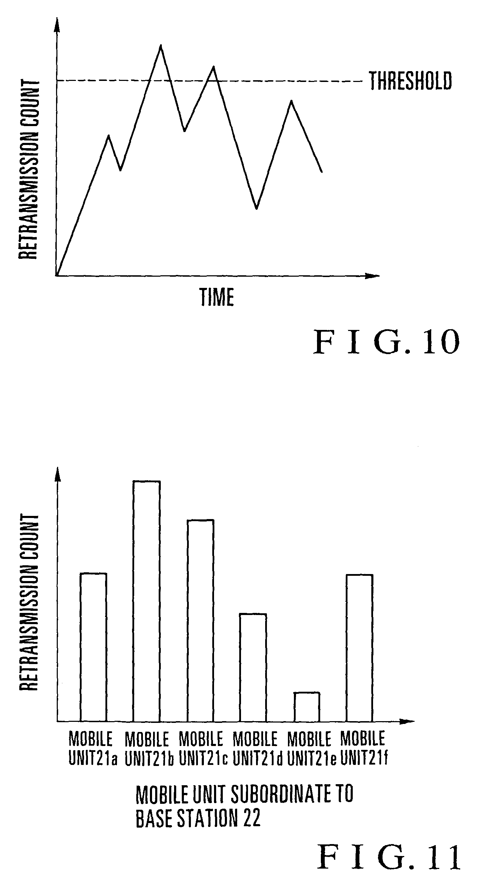

In contrast to this, as shown in Fig. 10, retransmission counts may be directly used without grouping, and a threshold may be set for these retransmission counts. In this case, if the retransmission count is larger than the threshold, a common channel is added. Otherwise, a common channel is cut.

### Fourth Embodiment

In the first and second embodiments, the average value of retransmission counts (retransmission level values) of communication channel setting request signals from all mobile units located in a given area is calculated, and the number of common channels is increased/decreased in accordance with this average level value.

In contrast to this, as shown in Fig. 11, retransmission counts may be detected in units of mobile units 21. In this case, when the retransmission count of a communication channel setting request signal from a given mobile unit 21 exceeds a predetermined value, the communication state in the area is improved.

As described above, according to the fourth embodiment, when the retransmission count of a communication channel setting request signal from a specific mobile unit 21 exceeds the predetermined value, it is determined that the communication state of this mobile unit 21 is a bad state (e.g., a state in which radio waves are blocked by buildings), and the communication state in the area is improved, thereby smoothly setting a communication channel for the mobile unit 21.

### Fifth Embodiment

In the first to fourth embodiments, the communication state in a given area is improved by increasing/decreasing the number of common channels.

In contrast to this, if a retransmission count or retransmission level value exceeds a predetermined value, the output level of a common channel from a base station 22 may be increased, whereas if the retransmission count or retransmission level value becomes less than the predetermined value, the output level of the common channel from the base station 22 may be decreased. An increase in the output level of the common channel from the base station 22 allows each mobile unit 21 to smoothly set a communication channel. If the output level of the common channel from the base station 22 is decreased when the retransmission count or retransmission level value becomes less than the predetermined value, a waste of power in the system can be avoided.

Alternatively, if a retransmission count or retransmission level value exceeds a predetermined value, the output level of a communication channel setting request signal from the mobile unit 21 may be increased, whereas if the retransmission count or retransmission level value becomes less than the predetermined value, the output level of the communication channel setting request signal from the mobile unit 21 may be decreased. If the output level of a communication channel setting request signal is increased, the output level of a specific mobile unit 21 having difficulty in establishing a communication channel is increased. This allows the mobile unit 21 to smoothly set a communication channel. If the output level of the communication channel setting request signal is decreased when a good communication state is established, the output level of the mobile unit 21 can be suppressed low. This makes it possible to avoid a waste of power in the mobile unit 21.

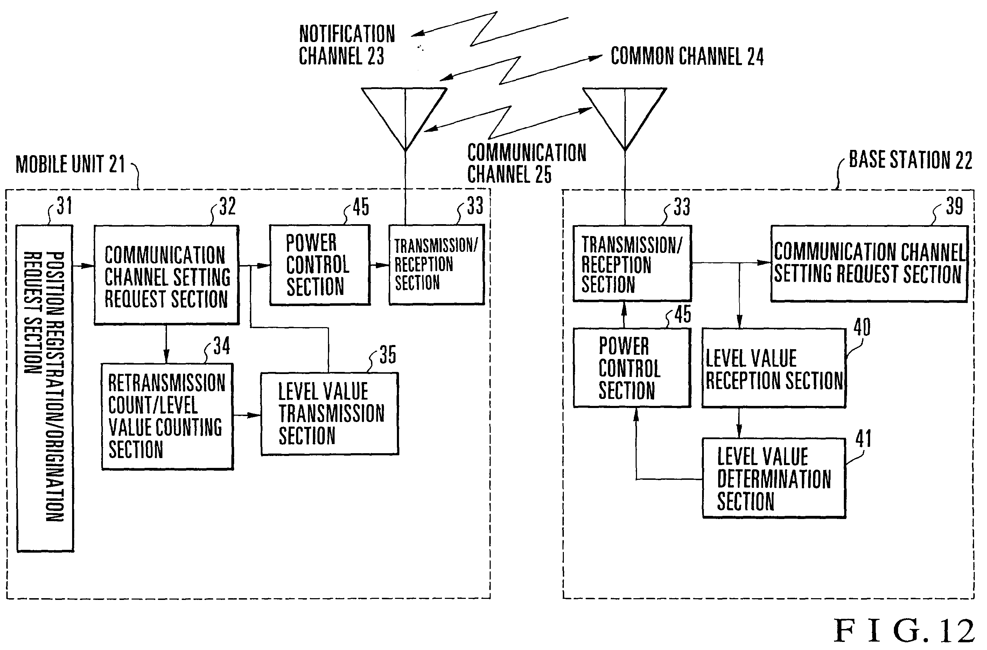

In the fifth embodiment, as shown in Fig. 12, the base station 22 or mobile unit 21 must include a power control section 45 for changing the output level of a common channel or communication channel setting request signal in accordance with a retransmission count (retransmission level value) . According to the arrangement of the fifth embodiment, however, the present invention is effective when radio waves are difficult to reach owing to the position of the mobile unit 21, weather conditions, or the like.

In each embodiment described above, a retransmission count (retransmission level value) is set in a communication channel setting request signal. However, a retransmission count can be transmitted as an independent signal to the base station 22 by using the common channel 24.

## Claims

1. A communication state improving method in a mobile communication system in which a plurality of mobile units (21) generate communication channel setting requests to a base station (22) by using a common channel, characterized by comprising the steps of measuring a retransmission count of a communication channel setting request in a service area of said base station, and improving the communication state in the service area on the basis of the count result.

2. A method according to claim 1, further comprising the step of improving the communication state in the service area if the retransmission count of communication channel setting requests from all mobile units located in the service area exceeds a predetermined value.

3. A method according to claim 1, further comprising the step of improving the communication state in the service area if the retransmission count of a communication channel setting request from a specific mobile unit of all mobile units located in the service area exceeds a predetermined value.

4. A method according to claim 1, further comprising the step of measuring the retransmission counts of the communication channel setting requests, forming the count values into groups of different levels according to predetermined counts, and improving the communication state in the service area in accordance with a level value of a group.

5. A method according to claim 4, further comprising the step of linearly increasing level values set in units of groups with an increase in the retransmission count of the communication channel setting request.

6. A method according to claim 4, further comprising the step of logarithmically increasing level values set in units of groups with an increase in the retransmission count of the communication channel setting request.

7. A method according to claim 1, further comprising the step of, when the retransmission count of the communication channel setting request exceeds a predetermined value, improving the communication state in the service area by additionally setting a common channel in the service area.

8. A method according to claim 1, further comprising the step of, when the retransmission count of the communication channel setting request becomes less than a predetermined value, improving the communication state in the service area by cutting the common channel.

9. A method according to claim 1, further comprising the step of, when the retransmission count of the communication channel setting request exceeds a predetermined value, improving the communication state in the service area by increasing an output level of a common channel from said base station.

10. A method according to claim 1, further comprising the step of, when the retransmission count of the communication channel setting request becomes less than a predetermined value, improving the communication state in the service area by decreasing an output level of a common channel from said base station.

11. A method according to claim 1, further comprising the step of, when the retransmission count of the communication channel setting request in a specific mobile unit exceeds a predetermined value, improving the communication state in the service area by increasing an output level of a communication channel setting request signal from said mobile unit.

12. A method according to claim 1, further comprising the step of, when the retransmission count of the communication channel setting request in a specific mobile unit becomes less than a predetermined value, improving the communication state in the service area by decreasing an output level of a communication channel setting request signal from said mobile unit.

13. A mobile communication system characterized by comprising a mobile unit (21) and a base station (22),
said mobile unit including a position registration/origination request section (31) for generating position registration and origination requests, a communication channel setting request section (32) for transmitting a communication channel setting request signal to said base station when the position registration and origination requests are generated, a counting section (34) for measuring a retransmission count of a communication channel setting request signal, and a transmission section (35) for transmitting the retransmission count obtained by said counting section to said base station, and
said base station including a reception section (40) for receiving the retransmission count transmitted from said mobile unit, and a communication state improving section (42 - 45) for improving a communication state in a service area on the basis of the retransmission count received from said mobile unit.

14. A system according to claim 13, wherein said communication state improving section (42 - 44) of said base station improves the communication state in the service area by increasing/decreasing the number of common channels to be set in the service area of said base station.

15. A system according to claim 13, wherein said communication state improving section (45) of said base station improves the communication state in the service area by adjusting an output level of a common channel set in the service area of said base station.

16. A system according to claim 13, wherein said mobile unit comprises a communication state improving section (45) for improving the communication state in the service area on the basis of the retransmission count obtained by said counting section.

17. A system according to claim 16, wherein said communication state improving section (45) of said mobile unit improves the communication state in the service area by adjusting an output level of the communication channel setting request signal.
